# FASCICULE DE BREVET EUROPEEN

(11) **EP 2 147 820 B1**
(45) Date de publication et mention de la délivrance du brevet: **20.07.2011**
(21) Numéro de dépôt: 09165218.0
(22) Date de dépôt: 10.07.2009
(51) Int. Cl.: B60N 2/30, B60N 2/68

(54) **Siège à dossier perfectionné pour véhicule automobile**
Sitz mit perfektionierter Rückenlehne für Kraftfahrzeug
Seat with improved backrest for automotive vehicle

(30) Priorité: 24.07.2008 FR 0804218
(43) Date de publication de la demande: 27.01.2010
(73) Titulaire: GRUPO ANTOLIN-INGENIERIA, S.A., 09080 Burgos (ES); PEUGEOT CITROËN AUTOMOBILES S.A., 78140 Vélizy Villacoublay (FR)
(72) Inventeur: Dutot, Christophe, 94400, VITRY SUR SEINE (FR); Duchateau, Jean, 43330, PONT SALOMON (FR); Aumond, Jean Claude, 42600, MONTBRISON (FR)
(74) Mandataire: Delorme, Nicolas

(56) Documents cités:
- WO-A-99/41103
- WO-A-2004/043730
- FR-A- 2 079 920
- FR-A- 2 874 868

## Description

La présente invention concerne un siège escamotable notamment pour un véhicule automobile.

De nombreux véhicules sont équipés de sièges escamotables ; ces sièges permettent d'adapter la configuration de l'habitacle aux besoins de l'utilisateur.

On connaît par le document FR-A-2 079 920 un siège repliable par pivotement du dossier selon le préambule de la revendication 1.

Ainsi, un véhicule de type monospace ou break peut embarquer jusqu'à sept ou huit passagers ou peut présenter un plancher plat qui permet alors de charger des objets volumineux.

Pour assurer cette modularité, les sièges équipant ce type de véhicules peuvent présenter une armature permettant selon les besoins de placer le siège en configuration déployée dans laquelle un passager peut prendre place dans le siège ou en position escamotée dans laquelle le siège est replié. Selon l'architecture du véhicule, le siège peut être replié sur le plancher ou peut être replié dans une cuvette pratiquée dans le plancher du véhicule.

Un siège escamotable est donc complexe et doit obéir à des exigences contradictoires.

Ainsi, un siège escamotable doit assurer un confort satisfaisant au passager notamment en possédant une assise suffisamment surélevée par rapport au plancher et en possédant un dossier qui, en position déployée, doit être suffisamment haut. En revanche, en configuration escamotée le siège doit présenter l'encombrement le plus faible possible. Dans le cas où le siège s'escamote dans une cuvette, il doit pouvoir s'insérer entièrement dans le plancher sans laisser subsister des saillies d'aucune nature.

Pour obtenir la plus grande compacité possible lorsque le siège est en position escamotée, il est classique de doter un siège escamotable de garnitures de faible épaisseur. Les garnitures sont par nature des éléments volumineux qui sont nécessaires au bon confort mais qui, en contrepartie, contribuent au volume du siège lorsqu'il est escamoté.

Or, la cuvette dans laquelle le siège vient s'escamoter est peu profonde si bien que la compacité du siège en position escamotée est obtenue par des garnitures de faible épaisseur et donc au détriment du confort du passager.

Dans ce contexte technique, un but de la présente invention est de proposer un siège escamotable qui soit à la fois compact en position escamotée et qui procure un confort satisfaisant en position déployée.

La présente invention concerne un siège escamotable notamment pour un véhicule automobile comprenant :
- une assise sur laquelle est articulé un dossier par une liaison pivot, le dossier présentant une extrémité proximale au niveau de laquelle la liaison pivot est positionnée et une extrémité distale opposée, et
- des organes de liaison de l'assise et du dossier à la structure du véhicule,
caractérisé en ce que le dossier comprend :
- une armature primaire reliée à l'assise et aux organes de liaison et
- une armature secondaire sur laquelle est fixée un nappe de suspension élastique, l'armature secondaire étant reliée, (i) au niveau de l'extrémité distale du dossier à l'armature primaire, par une liaison pivot et (ii) au niveau de la partie proximale du dossier par des moyens de liaison permettant à l'armature secondaire de se décaler angulairement de l'armature primaire lorsque le siège est en position déployée pour ménager un espace dans lequel la nappe de suspension peut se déformer élastiquement lorsqu'elle est sollicitée, et permettant à l'armature secondaire de pivoter en direction de l'armature primaire lors de l'escamotage du siège.

Ainsi, l'invention concerne un siège dont, notamment, le dossier offre un niveau de confort supérieur à celui des sièges de l'art antérieur. Une caractéristique spécifique des sièges escamotables est la faible épaisseur de leur garniture. Or l'épaisseur de la garniture est le facteur principal du bon confort d'un siège. A cette problématique, l'invention propose un dossier en deux parties : à savoir, une armature primaire qui constitue la partie structurelle principale du dossier et un armature secondaire qui est susceptible de pivoter par rapport à cette armature primaire pour créer un espace dans lequel la nappe de suspension peut se détendre lorsqu'un passager prend place sur le siège.

L'invention propose de dissocier le dossier d'un siège en une partie primaire dans laquelle est logée une partie secondaire qui peut pivoter pour se décaler angulairement de l'armature primaire. Ce décalage angulaire se fait avec la plus grande amplitude au niveau de la partie du siège qui correspond à la zone d'appui lombaire. C'est donc au niveau de cette zone cruciale pour le confort du passager que l'armature secondaire s'écarte angulairement de l'armature primaire ; ceci permet de créer un espace dans lequel la nappe de suspension peut se détendre. Le confort dans la zone lombaire est notamment défini par la capacité du siège à fournir un débattement à la nappe de suspension. Les sièges de l'art antérieur sont dépourvus de cette faculté puisque la nappe de suspension ne peut se détendre que de façon limitée par l'épaisseur du dossier qui, dans un siège escamotacle, est réduite.

Les caractéristiques complémentaires énumérés ci-aprés font l'objet des revendications dépendantes.

Selon une forme de réalisation préférée de l'invention, le siège comprend au moins une biellette qui relie la partie proximale de l'armature secondaire à l'assise qui a une action de poussée sur l'armature secondaire en direction de l'armature primaire lors de la rotation du dossier en direction de l'assise.

De préférence, le siège comprend deux biellettes disposées de part et d'autre de l'armature secondaire, ce qui contribue à la bonne stabilité de l'armature secondaire.

Dans une forme de réalisation de l'invention, les moyens de liaison sont mobiles pour permettre au siège de passer d'une position déployée dans laquelle le dossier est sensiblement dans une position verticale et l'assise est sensiblement orientée à l'horizontale et une position repliée dans laquelle le dossier est rabattu sur l'assise. Le siège ainsi défini peut se loger dans une cuvette de petite dimension ; l'invention permet en particulier une grande compacité dans la direction verticale Z du véhicule car le dossier est remarquablement mince lorsque le siège est en position escamotée.

Selon une possibilité, les organes de liaison de l'assise et du dossier comprennent un pied avant et un pied arrière.

Dans une forme de réalisation avantageuse de l'invention, l'armature primaire comprend deux joues latérales, au moins dans sa partie proximale, qui encadrent l'armature secondaire. Ces deux joues permettent de masquer le débattement angulaire de l'armature secondaire qui est maximum au niveau de la partie proximale du dossier.

Dans une forme de réalisation de l'invention, l'armature secondaire reçoit une garniture en matière textile.

Il peut être prévu que l'armature primaire reçoit à son extrémité distale un appui tête.

Pour sa bonne compréhension, l'invention est décrite en référence au dessin ci annexé représentant à titre d'exemple non limitatif, une forme de réalisation d'un siège selon celle-ci.
Figures 1 à 4 montrent en vue de côté, de manière schématique, une première forme de réalisation respectivement en position déployée puis dans deux positions intermédiaires, et enfin en position escamotée d'un siège selon l'invention schématisée ;
Figure 5 est une vue en perspective éclatée d'une forme de réalisation du siège selon l'invention ;
Figure 6 montre en perspective une forme d'un siège selon l'invention dont les éléments de garniture ont été omis.

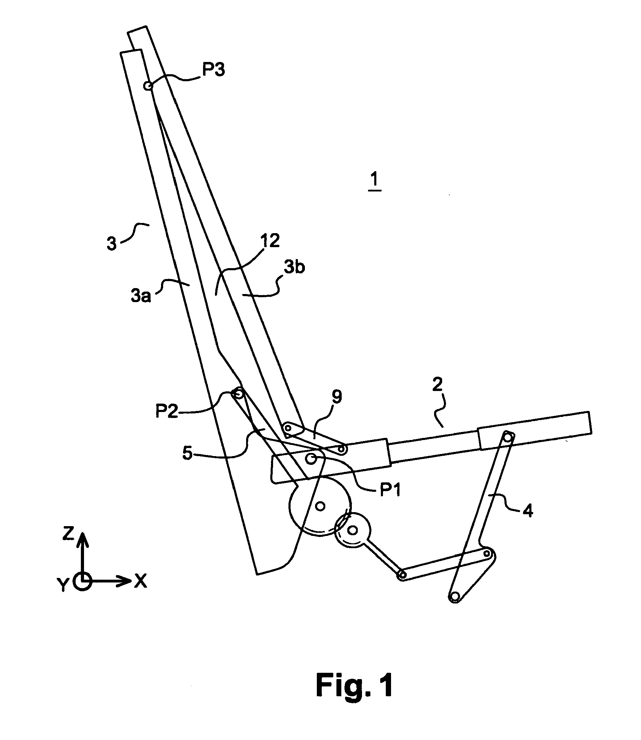

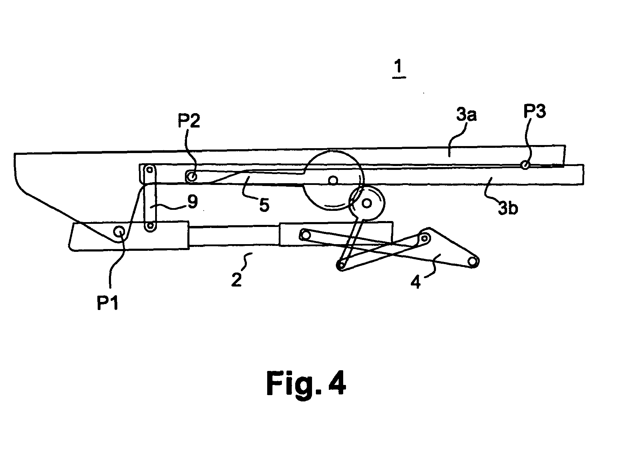

Le dessin illustre schématiquement une forme de réalisation d'un siège selon l'invention. En d'autres termes, les éléments de garnissage (aux figures 1 à 4) et les éventuels éléments de capotage ont été omis pour faire apparaître clairement l'armature du siège selon l'invention et les avantages qui en découlent.

Par convention, la présente description est faite par rapport à un référentiel XYZ lié au véhicule présentant une direction longitudinale X par rapport à laquelle sont notamment utilisés les termes « longueur », « avant », « arrière », une direction transversale Y par rapport à laquelle sont notamment utilisés les termes « largeur », « latéral », « transversal » et une direction verticale Z, par rapport à laquelle sont notamment utilisés les termes « supérieur », « inférieur », « hauteur » . Il est également précisé que les pièces du siège qui se retrouvent symétriquement de chaque côté du siège portent les mêmes numéros de référence.

Il est précisé que le véhicule dans lequel le siège selon l'invention peut être destiné à être embarqué peut comprendre une cuvette ménagée dans le plancher. Par cuvette, on entend une cavité de forme généralement parallélépipédique dans laquelle le siège vient s'escamoter.

Le siège 1 possède une assise 2 et un dossier 3, qui sont reliés par une liaison pivot P1.

Les moyens de liaison du siège à la structure du véhicule sont constitués, dans le cas du siège illustré, par un pied avant 4 qui relie la partie avant de l'assise 2 à la structure du véhicule et par deux bielles arrière qui relient le dossier 3 à la structure du véhicule ; cette configuration est indicative des moyens de liaison du siège sur la structure du véhicule et il est tout à fait envisageable de prévoir d'autres formes de réalisation de ces moyens de liaison dans le cadre de la présente invention. Le pied avant 4 tout comme chacune des bielles arrière 5 présentent à leurs extrémités des liaisons pivots qui permettent au siège de passer d'une position déployée à une position escamotée et inversement.

De façon originale, le dossier 3 du siège possède deux parties articulées l'une par rapport à l'autre.

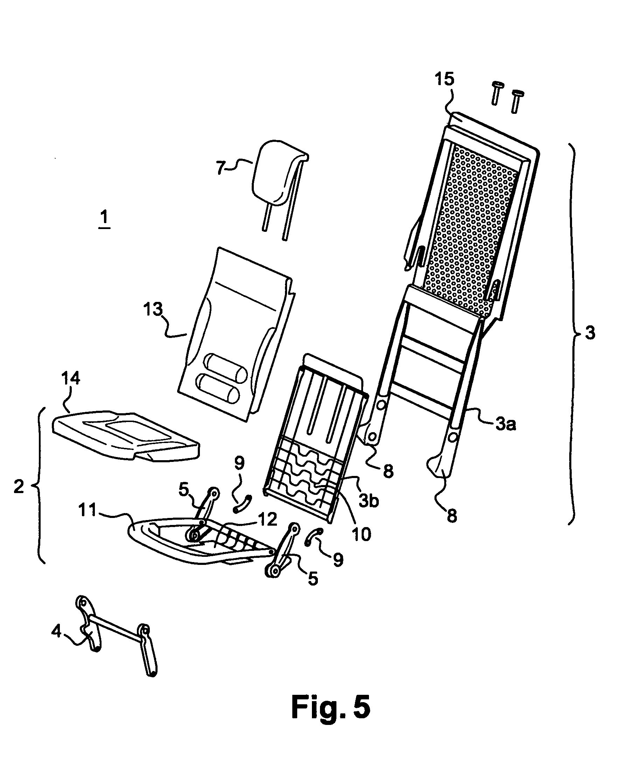

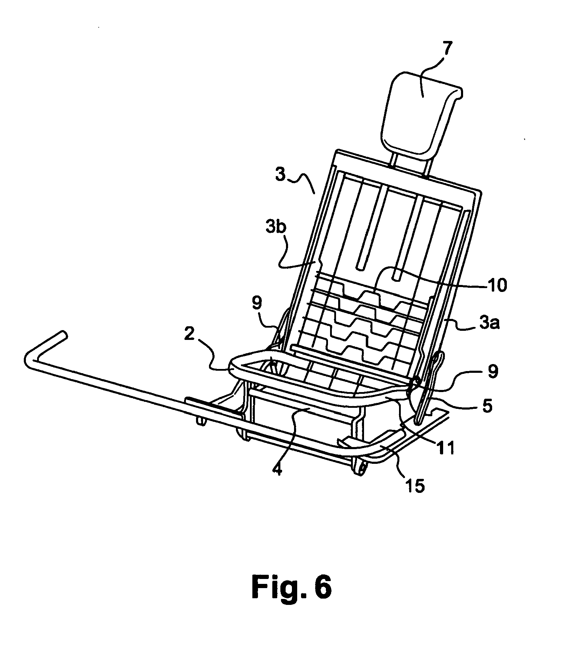

Le dossier 3 comprend, d'une part, une armature primaire 3a. Cette armature primaire 3a est réalisée de préférence en métal, acier ou magnésium. L'armature primaire 3a supporte la liaison pivot P1 assurant la connexion avec l'assise 2 et les liaisons pivots P2 assurant la connexion avec chacune des bielles arrière 5. On constate également que l'armature primaire 3a peut embarquer un appui tête 7 qui, dans la forme de réalisation illustrée à la figure 5 ou à la figure 6, est rétractable. L'armature primaire 3a pourrait également embarquer un mécanisme d'enroulement d'une ceinture de sécurité. L'armature primaire 3a assure et embarque les fonctions essentielles du dossier 3.

La figure 5 montre que l'armature primaire 3a peut être dotée de joues latérales 8 ; pour des raisons qui apparaîtront plus loin, ces deux joues 8 ont un débord au niveau de la partie proximale de l'armature primaire 3a c'est-à-dire sa partie qui est proche de la liaison pivot P1 d'articulation du dossier 3 sur l'assise 2.

Le dossier 3 comprend également une armature secondaire 3b qui est insérée dans l'armature primaire 3a. L'armature secondaire 3b peut prendre la forme d'une armature quadrangulaire possédant deux montants et deux traverses comme cela est représenté sur la figure 5. Sur une partie ou sur la totalité de sa hauteur, l'armature secondaire 3b reçoit une nappe de suspension 10. La nappe de suspension 10 peut être constituée de fils métalliques ressort comme cela apparait sur les figures 5 et 6. L'élasticité de la nappe de suspension 10 est dans ce cas là au moins en partie fournie par la forme de créneau des fils métalliques qui peuvent s'allonger lorsqu'ils sont sollicités par un passager qui prend place sur le siège et qui ensuite reprennent leur forme initiale lorsque la sollicitation cesse. La nappe de suspension 10 pourrait également être constituée de textile élastique.

La liaison entre l'armature primaire 3a et l'armature secondaire 3b se fait par :
- une liaison pivot P3 située au niveau de la partie distale du dossier 3 c'est-à-dire sa partie la plus éloignée de la liaison qui lie le dossier à l'assise 2 ;
- deux biellettes 9 situées au niveau de la partie proximale du dossier. Les deux biellettes 9 se placent de part et d'autre de l'armature secondaire 3b et sont chacune dotées de liaisons pivot.

Les deux biellettes 9 sont positionnées sur l'assise 2 en avant de la liaison pivot P1 qui relie l'assise 2 au dossier 3. Il est à noter que la rotation de l'armature secondaire 3b dans une direction qui l'éloignerait de l'armature primaire 3a est rendue impossible. En effet, dans sa partie qui est située au delà de la liaison pivot P3, l'armature secondaire 3b est en appui contre l'armature primaire 3a ce qui bloque la rotation de l'armature secondaire 3b.

L'assise 2 peut comprendre une armature métallique 11 sur laquelle est fixée une nappe élastique 10 qui peut être de même facture que celle qui est fixée sur l'armature secondaire 3b.

La figure 5 montre que des éléments de garniture de dossier 13 et d'assise 14 peuvent être rapportés sur respectivement le dossier 3 et l'assise 2.

On peut également constater sur la figure 5 que le dossier 3 peut comprendre sur sa face arrière une plaque de protection 15.

Le siège 1 est, par ailleurs, doté de moyens de verrouillage qui agissent sur une ou plusieurs des liaisons pivot de façon à immobiliser le siège dans sa position déployée. Ces moyens qui peuvent présenter différentes structures bien connues (grains dentés, crochet etc. commandés par une sangle) ne sont pas décrits plus avant.

La figure 1 fait apparaitre un espace 12 délimité par l'armature primaire 3a et l'armature secondaire 3b. L'espace 12 s'avère fondamental pour le confort du siège puisque c'est cet espace qui va permettre d'absorber la nappe de suspension 10 lorsqu'elle se déforme élastiquement sous le poids d'un passager.

Lors de l'escamotage du siège, après action sur les moyens de verrouillage, le dossier 3 pivote en direction de l'assise 2 et vient se rabattre contre celle-ci.

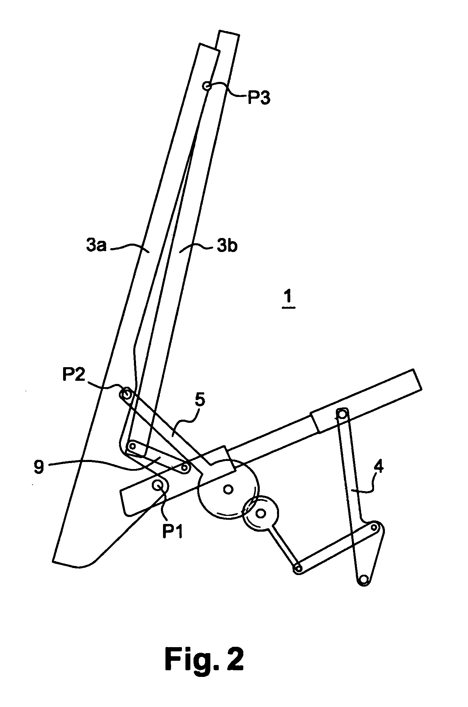

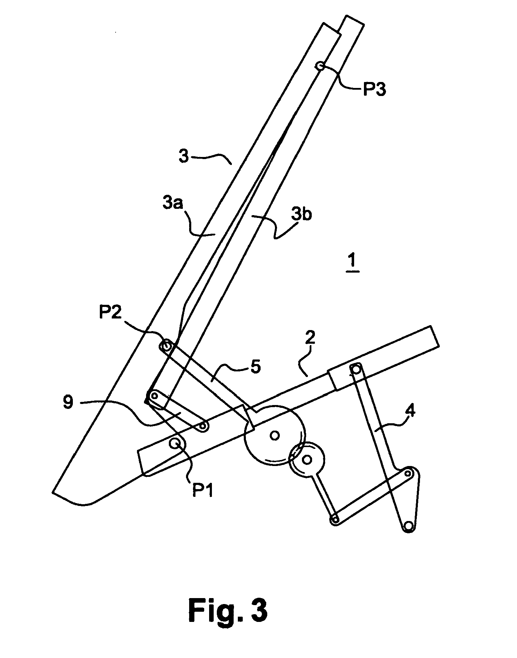

Les figures 2 et 3 montrent l'escamotage au cours duquel l'armature secondaire 3b se rapproche de l'armature primaire 3a ; ce rapprochement est causé par les deux biellettes 9 qui poussent l'armature secondaire 3b contre l'armature primaire 3a.

Les joues 8 ont pour effet de protéger latéralement le débattement angulaire de l'armature secondaire 3b au cours de l'escamotage et du déploiement du siège.

En position escamotée, l'armature secondaire 3b est parallèle à l'armature primaire 3a et est donc extrêmement compact.

Dans le cas du siège montré sur les figures, l'escamotage du siège s'accompagne simultanément du repliement du piétement de façon à obtenir un siège qui peut se loger dans une cuvette de très petite dimension. Le pied avant 4 et les bielles arrière 5 pivotent jusqu'à occuper une position horizontale.

On peut constater que, en position escamotée, l'armature secondaire 3b est repliée contre l'armature primaire 3a sans laisser subsister d'espace.

Si cette mise en oeuvre de l'invention est particulièrement adaptée à un siège de rang 2 ou de rang 3, il convient de noter que l'invention peut être mise en oeuvre dans le cadre d'un siège dont l'assise 2 est fixe.

La figure 6 fait apparaître un bâti 15 qui peut être directement placé dans le véhicule.

Bien entendu, l'invention n'est pas limitée à la forme de réalisation décrite ci-dessus à titre d'exemple non limitatif mais elle en embrasse au contraire toutes les formes de réalisation si comprises dans le cadre de l'invention telle que définie par les revendications.

Ainsi, il pourrait être envisagé que les moyens de liaison permettant à l'armature secondaire de se décaler angulairement de l'armature primaire soient constitués par une came solidaire de l'assise qui, pendant l'ouverture du siège, pousse l'armature secondaire vers sa position déployée et la maintienne en place. L'action inverse est alors assurée par un élément ressort qui aura été comprimé lors du déploiement. Il est possible aussi, de laisser libre la rotation de l'armature secondaire dans le sens de l'escamotage.

## Revendications

1. Siège escamotable notamment pour un véhicule automobile comprenant :
- une assise (2) sur laquelle est articulé un dossier (3) par une liaison pivot, le dossier (3) présentant une extrémité proximale au niveau de laquelle la liaison pivot est positionnée et une extrémité distale opposée, et
- des organes de liaison de l'assise (2) et du dossier (3) à la structure du véhicule,
**caractérisé en ce que** le dossier (3) comprend
- une armature primaire (3a) reliée à l'assise (2) et aux organes de liaison et
- une armature secondaire (3b) sur laquelle est fixée un nappe de suspension élastique (10), l'armature secondaire (3b) étant reliée, (i) au niveau de l'extrémité distale du dossier (3) à l'armature primaire (3a), par une liaison pivot et (ii) au niveau de la partie proximale du dossier (3), par des moyens de liaison permettant à l'armature secondaire (3b) de se décaler angulairement de l'armature primaire (3a) lorsque le siège est en position déployée pour ménager un espace (12) dans lequel la nappe de suspension (10) peut se déformer élastiquement lorsqu'elle est sollicitée, et permettant à l'armature secondaire (3b) de pivoter en direction de l'armature primaire lors de l'escamotage du siège.

2. Siège escamotable selon la revendication 1, **caractérisé en ce que** le siège comprend au moins une biellette qui relie la partie proximale de l'armature secondaire (3b) à l'assise (2).

3. Siège escamotable selon la revendication 2, **caractérisé en ce que** le siège comprend deux biellettes (9) disposées de part et d'autre de l'armature secondaire (3b).

4. Siège escamotable selon l'une des revendications 1 à 3, **caractérisé en ce que** les moyens de liaison sont mobiles pour permettre au siège de passer d'une position déployée dans laquelle le dossier (3) est sensiblement dans une position verticale et l'assise (2) est sensiblement orientée à l'horizontale et une position repliée dans laquelle le dossier (3) est rabattu sur l'assise (2).

5. Siège escamotable selon l'une des revendications 1 à 4, **caractérisé en ce que** les organes de liaison de l'assise (2) et du dossier (3) comprennent un pied avant (4) et un pied arrière.

6. Siège escamotable selon l'une des revendications 1 à 5, **caractérisé en ce que** l'armature primaire (3a) comprend deux joues latérales, au moins dans sa partie proximale, qui encadrent l'armature secondaire (3b).

7. Siège escamotable selon l'une des revendications 1 à 6, **caractérisé en ce que** l'armature secondaire (3b) reçoit une garniture en matière textile.

8. Siège escamotable selon l'une des revendications 1 à 7, **caractérise en ce que** l'armature primaire (3a) reçoit à son extrémité distale un appui tête (7).

## Claims

1. A retractable seat, in particular for an automotive vehicle, comprising:
- a seat bottom (2) on which a seatback (3) is articulated by a pivot connection, the seatback (3) having a proximal end at which the pivot connection is positioned and an opposite distal end, and
- members for connecting the seat bottom (2) and the seatback (3) to the structure of the vehicle,
**characterized in that** the seatback (3) comprises
- a primary frame (3a) connected to the seat bottom (2) and the connecting members, and
- a secondary frame (3b) on which an elastic suspension layer (10) is fastened, the secondary frame (3b) being connected, (i) at the distal end of the seatback (3) to the primary frame (3a), by a pivot connection, and (ii) at the proximal part of the seatback (3), via connecting means allowing the secondary frame (3b) to angularly shift from the primary frame (3a) when the seat is in the deployed position to form a space (12) in which the suspension layer (10) can elastically deform when it is stressed, and allowing the secondary frame (3b) to pivot towards the primary frame during retraction of the seat.

2. The retractable seat according to claim 1, **characterized in that** the seat comprises at least one connecting rod that connects the proximal part of the secondary frame (3b) to the seat bottom (2).

3. The retractable claim according to claim 2, **characterized in that** the seat comprises two connecting rods (9) arranged on either side of the secondary frame (3b).

4. The retractable seat according to one of claims 1 to 3, **characterized in that** the connecting means are mobile to allow the seat to go from a deployed position in which the seatback (3) is substantially vertical and the seat bottom (2) is oriented substantially horizontally, and a folded position in which the seatback (3) is folded down on the seat bottom (2).

5. The retractable seat according to one of claims 1 to 4, **characterized in that** the connecting members of the seat bottom (2) and the seatback (3) comprise a front foot (4) and a rear foot.

6. The retractable seat according to one of claims 1 to 5, **characterized in that** the primary frame (3a) comprises two lateral flanges, at least in its proximal part, that surround the secondary frame (3b).

7. The retractable seat according to one of claims 1 to 6, **characterized in that** the secondary frame (3b) receives a fitting made from a textile.

8. The retractable seat according to one of claims 1 to 7, **characterized in that** the primary frame (3a) receives a head rest (7) at its distal end.

## Patentansprüche

1. Klappsitz, vor allem für ein Kraftfahrzeug, der umfasst:
- eine Sitzfläche (2), an der eine Rückenlehne (3) durch eine Drehverbindung angelenkt ist, wobei die Rückenlehne (3) ein proximales Ende aufweist, auf dessen Ebene die Drehverbindung positioniert ist, und ein gegenüberliegendes distales Ende, und
- Verbindungsorgane der Sitzfläche (2) und der Rückenlehne (3) mit der Struktur des Fahrzeugs,
**dadurch gekennzeichnet, dass** die Rückenlehne (3) umfasst
- eine primäre Armierung (3a), die mit der Sitzfläche (2) und den Verbindungsorganen verbunden ist, und
- eine sekundäre Armierung (3b), auf der eine elastische Federlage (10) befestigt ist, wobei die sekundäre Armierung (3b) (i) auf Ebene des distalen Endes der Rückenlehne (3) mit der primären Armierung (3a) durch eine Drehverbindung und (ii) auf Ebene des proximalen Abschnitts der Rückenlehne (3) durch Verbindungsmittel verbunden ist, die es der sekundären Armierung (3b) erlauben, sich winklig von der primären Armierung (3a) zu verschieben, wenn der Sitz in aufgeklappter Stellung ist, um einen Raum (12) freizugeben, in dem sich die Federlage (10) elastisch verformen kann, wenn sie beansprucht wird, und der sekundären Armierung (3b) erlaubt, beim Klappen des Sitzes in Richtung der primären Armierung zu schwenken.

2. Klappsitz nach Anspruch 1, **dadurch gekennzeichnet, dass** der Sitz mindestens eine Stange umfasst, die den proximalen Abschnitt der sekundären Armierung (3b) mit der Sitzfläche (2) verbindet.

3. Klappsitz nach Anspruch 2, **dadurch gekennzeichnet, dass** der Sitz zwei Stangen (9) umfasst, die auf der einen und der anderen Seite der sekundären Armierung (3b) angeordnet sind.

4. Klappsitz nach einem der Ansprüche 1 bis 3, **dadurch gekennzeichnet, dass** die Verbindungsmittel mobil sind, um dem Sitz zu erlauben, von einer aufgeklappten Stellung, in der die Rückenlehne (3) etwa in einer vertikalen Stellung ist und die Sitzfläche (2) etwa horizontal ausgerichtet ist und einer zusammengeklappten Stellung, in der die Rückenlehne (3) auf die Sitzfläche (2) heruntergeklappt ist, zu wechseln.

5. Klappsitz nach einem der Ansprüche 1 bis 4, **dadurch gekennzeichnet, dass** die Verbindungsorgane der Sitzfläche (2) und der Rückenlehne (3) einen vorderen Fuß (4) und einen hinteren Fuß umfassen.

6. Klappsitz nach einem der Ansprüche 1 bis 5, **dadurch gekennzeichnet, dass** die primäre Armierung (3a) zwei seitliche Wangen umfasst, zumindest in ihrem proximalen Abschnitt, die die sekundäre Armierung (3b) umrahmen.

7. Klappsitz nach einem der Ansprüche 1 bis 6, **dadurch gekennzeichnet, dass** die sekundäre Armierung (3b) ein Zubehör aus textilem Material aufnimmt.

8. Klappsitz nach einem der Ansprüche 1 bis 7, **dadurch gekennzeichnet, dass** die primäre Armierung (3a) an ihrem distalen Ende eine Kopfstütze (7) aufnimmt.
